# EUROPEAN PATENT SPECIFICATION

(11) **EP 3 881 057 B1**
(45) Date of publication and mention of the grant of the patent: **25.10.2023**
(21) Application number: 19821201.1
(22) Date of filing: 15.11.2019
(51) Int. Cl.: G01N 21/75, G01N 21/77

(54) **METHOD AND SYSTEM FOR SPECTROPHOTOMETRIC ANALYSIS OF A SAMPLE**
VERFAHREN UND VORRICHTUNG ZUR SPEKTROSKOPISCHEN ANALYSE EINER PROBE
PROCÉDÉ ET SYSTÈME D'ANALYSE SPECTROPHOTOMÉTRIQUE D'UN ÉCHANTILLON

(30) Priority: 15.11.2018 IT 201800010364
(43) Date of publication of application: 22.09.2021
(73) Proprietor: Chemitec S.r.l., 50018 Scandicci (FI) (IT)
(72) Inventor: CATELANI, Filippo, 50018 Scandicci (FI) (IT)
(74) Representative: IP Sextant s.r.l.
(86) International application number: PCT/IB2019/059828
(87) International publication number: WO 2020/100100

(56) References cited:
- EP-A1- 2 818 848
- JP-A- H04 177 148
- US-A1- 2010 240 141
- US-A1- 2015 362 471
- US-A1- 2017 045 441
- US-A1- 2017 176 264

## Description

The present invention relates to a method for performing the spectrophotometric analysis of a sample of a liquid solution. The present invention concerns, in particular, a method for the spectrophotometric analysis of a sample of a liquid solution of water while it flows, optionally with a constant flow rate, in a duct of a hydraulic circuit of a domestic or commercial plant.

Still more particularly, the present invention relates to a method for performing such an analysis by means of a substantially monochromatic single beam used for irradiating the sample of liquid solution of water, for example drinkable water, industrial water, waste water, water used in swimming pools, for fishing farming, waste water from chemical plants, paper mills, food industries, etc..

The present invention also relates to a system for implementing such a method.

It should be noted that, hereinafter in the present description, reference will be made mainly to a method for the spectrophotometric analysis of a sample of a liquid solution of water and to the corresponding system. It should however be noted that the method and the system according to the invention can be applied in any other technological context wherein it is necessary to perform the spectrophotometric analysis of any fluid, even different from water, while always remaining within the scope of protection of the present invention as defined by the appended claims, provided that such fluid flows, optionally with a constant flow rate, in a duct of a hydraulic circuit of a domestic or commercial plant.

Furthermore, it should be pointed out that the term "substantially monochromatic beam", in the present description and in the following claim, means an electromagnetic radiation emitted by a light source, characterised by a single wavelength λ₀ or by a narrow band of wavelengths around that wavelength λ₀, for example diverging from λ₀ approximately by ± 30 nm, optionally ± 20 nm.

As it is known, the spectrophotometric analysis is based on the irradiation of a sample to be analysed, in this case of a sample of a liquid solution contained in a cell or measurement chamber, by means of a substantially monochromatic beam, along an optical path through said sample, and the detection of the luminous intensity associated with such a beam, after it has passed through the sample.

Lambert Beer Law, in fact, allows putting into relation the luminous intensity Iᵢₙ associated to a substantially monochromatic beam, incident on a sample to be analysed, and the luminous intensity Iₒᵤₜ associated with such a beam, detected after being passed through the sample at the end of an optical path of defined length, with the sample absorbance and the corresponding (molar) concentration of a substance of interest included into the sample, which substance absorbs, during the passage of the substantially monochromatic beam through the sample, part of the luminous intensity.

The application of Lambert Beer law requires the substance of interest, the concentration of which is to be measured, to have a maximum absorption at wavelength λ₀ of the substantially monochromatic beam, with which the sample containing it is irradiated. Therefore, in traditional methods reactive substances are used, which are added to the sample to be analysed before the execution of the actual measurement, which produce with the substance of interest compounds that have a maximum radiation absorption just at the wavelength of the substantially monochromatic beam used for the spectrophotometric analysis.

Conventional systems for the implementation of the analysis method described briefly above comprise:
- one light source, configured to emit a substantially monochromatic beam having predefined and constant intensity;
- one cell or measurement chamber for the sample to be analysed, defining an inlet opening for the emission in the measurement chamber of the substantially monochromatic beam generated by the light source along one determined optical path, and a corresponding outlet opening for the exit of the substantially monochromatic beam at the end of that optical path;
- one detecting device, configured to detect the substantially monochromatic beam output from the measurement chamber through the outlet opening, at the end of the optical path; and
- at least one processing system of the substantially monochromatic beam thereby detected, configured to determine the concentration of the substance of interest contained in the sample, according to the law mentioned above.

With such a system, the substantially monochromatic beam generated by the light source, having fixed and constant luminous intensity, is sent in input to the measurement chamber through the inlet opening, along the optical path. It is then detected, attenuated, at the outlet opening at the end of the optical path, because part of its luminous intensity is absorbed during the travelled distance, along the optical path, in the measurement chamber by the sample contained in the measurement chamber, to which a corresponding reagent substance had previously been added. Known the fixed constant luminous intensity Iᵢₙ of the beam delivered in input to the measurement chamber, and measured the luminous intensity Iₒᵤₜ of that beam, detected in output from that chamber, the concentration of the substance in the sample, which combined with the reagent, has absorbed part of the energy of the inlet beam is calculated in a way known to the person skilled in the art.

Patent document US 2015/362471 A1 discloses a method according to the preamble of claim 1.

Traditional systems suffer from some drawbacks.

First of all, since in traditional systems the light source is configured to emit the substantially monochromatic beam at a constant and predefined luminous intensity and since, with use, the measurement chamber gets dirty because of impurities included in the sample of the liquid solution to be analysed, that accumulate on the walls of the chamber itself, measurements made by these systems are incorrect as time passes by, because the luminous intensity of the beam Iₒᵤₜ detected by the detecting device is lower than the actual one, due to the dirt accumulated on the walls of the measurement chamber. Measurements made by these systems are incorrect (i.e. lower compared to an actual value), with the passing of time, also because of the ageing of the emission components and components for detection of the substantially monochromatic light beam used by the system. In order to overcome this problem, frequent maintenance, cleaning operations of the measurement chamber and/or light source and/or detecting device are thereby introduced which, however, is inefficient and increases management costs of those systems.

Not only that, the substantially monochromatic beam to be used in the spectrophotometric analysis and, therefore, the light source to be used in the system depend on the type of analysis to be carried out on the sample under examination, i.e. from the substance which is to be quantified therein and, in practice, the majority of commercially available systems allows only one type of spectrophotometric analysis for the quantification of the concentration of a single substance in the sample of interest or, at most, for the quantification of a restricted category of substances which, combined with the reagent, have a maximum absorption at the specific wave length λ₀ of the substantially monochromatic beam that the light source of the system can emit. It follows that it is necessary to use a system which is different on a case-by-case basis (i.e. that is provided with a different light source each time) depending on the type of substance to be quantitatively determined in a sample under examination, and this is clearly inefficient from a resources management point of view.

The need is therefore felt to provide for a method and a relative system for spectrophotometric analysis of a sample of a liquid solution which solves the above mentioned drawbacks.

More particularly, the object of the present invention is to allow, in a simple, efficient and inexpensive way performing the spectrophotometric analysis of a sample of a liquid solution, by means of an improved measurement system, allowing to reduce the frequency of maintenance operations and perform, with a single system, analysis for the quantification of the concentration in a sample of a greater quantity of substances, with respect to those that can be quantified using traditional systems.

The current invention therefore provides a method according to claim 1 and a system of claim 12 configured to carry out the method. Further embodiments are disclosed in the dependent claims.

According to another aspect of the invention, said luminous intensity Iᵢₙ is determined by carrying out one "no-load" measurement in said measurement chamber according to the following steps:
A2.1 generating said at least one substantially monochromatic beam having an initial luminous intensity Iᵢₙ;
A2.2 illuminating said sample of said liquid solution, with said at least one substantially monochromatic beam, along said optical path;
A2.3 detecting said at least one substantially monochromatic beam, at the end of said optical path; and
A2.4 processing said at least one substantially monochromatic beam thereby detected, obtaining at least one reference parameter p₄, and
A2.5 comparing said at least one reference parameter p₄ with at least one predetermined first threshold value S₀ whereby if said at least one reference parameter p₄ is less than or equal to said at least one predetermined first threshold value S₀, said method comprises A2.6 emitting at least one error signal, to indicate a fault that prevents form completing said at least one "no-load" measurement.

According to a further aspect of the invention:
A2.7 if said at least one reference parameter p₄ is greater than said at least one a first threshold value S₀ and lower than at least one second threshold value Sₘᵢₙ with S₀<Sₘᵢₙ, and
A2.8 if said at least one excitation voltage Vᵢₙ applied to said at least one emitting device is lower than an acceptable maximum value, optionally equal to approximately 90% of V_{in_max},
   said method can comprise
A2.9 increasing the value of the luminous intensity Iᵢₙ of said at least one substantially monochromatic beam, by increasing said at least one excitation voltage Vᵢₙ applied to said at least one emitting device, and repeating said sub-steps A2.1 to A2.5, wherein said at least one monochromatic beam generated at said sub-step A2.1 has a luminous intensity Iᵢₙ corresponding to that determined at said sub-step A2.9 just performed.

According to an additional aspect of the invention, said step of increasing said value of the luminous intensity Iᵢₙ of said at least one substantially monochromatic beam, can comprise increasing said at least one excitation voltage Vᵢₙ of a certain percentage, optionally equal to 10%, optionally in a constant way or at set intervals.

According to another aspect of the invention:
A2.7 if said at least one reference parameter is greater than said at least one first threshold value S₀ and lower than said at least one second threshold value (Sₘᵢₙ) with S₀<Sₘᵢₙ, and
A2.8 if said at least one excitation voltage Vᵢₙ applied to said at least one emitting device is higher or equal to an acceptable maximum value, optionally equal to approximately 90% of V_{in_max}, said method can comprise switching to said step C of generation of said at least one substantially monochromatic beam with the luminous intensity Iᵢₙ corresponding to acceptable maximum value, and
emitting A2.10, a corresponding early warning signal, to inform that said at least one measurement chamber is starting to get dirty and the corresponding maintenance activities can be programmed.

According to a further aspect of the invention:
A2.11 if said at least one reference parameter p₄ is greater than said at least one second threshold value Sₘᵢₙ and lower or equal to at least one third threshold value Sₘₐₓ with Sₘᵢₙ<Sₘₐₓ, said method can comprise switching to said step C wherein the value of the luminous intensity Iᵢₙ of the substantially monochromatic beam corresponds to the luminous intensity value I_{IN} of the substantially monochromatic beam at said sub-step A2.1 just performed.

According to an additional aspect of the invention:
A2.11 if said at least one reference parameter p₄ is greater than said at least one third threshold value Sₘₐₓ, said method can comprise
A2.12 reducing the value of the luminous intensity Iᵢₙ of said at least one substantially monochromatic beam, by reducing said at least one excitation voltage Vᵢₙ applied to said at least one emitting device, and repeating said sub-steps A2.1 to A2.5, wherein said at least one monochromatic beam generated at said sub-step A2.1 has a luminous intensity Iᵢₙ corresponding to that determined at said sub-step A2.12 just performed.

According to another aspect of the invention, said at least one reference parameter p₄ is a measured voltage value outputted from said at least one detecting device.

According to a further aspect of the invention, said at least one predetermined first threshold value S₀ can be a voltage value corresponding to a voltage expected at said at least one detecting device when said at least one excitation voltage Vᵢₙ applied to said at least one emitting device is approximately equal to V_{in_min}+( 30 % (V_{in_max} - V_{in_min})) and is optionally comprised between 550 and 750 mV, more optionally comprised between 600 and 700 mV,A still more optionally approximately 650 mV and/or wherein said at least one predetermined second threshold value Sₘᵢₙ is a voltage value between 1600 and 2000 mV, more optionally comprised between 1700 and 1900 mV, still more optionally about 1800 mV and/or said at least one predetermined third threshold value Sₘₐₓ can be a voltage value between 2000 and 2080 mV, more optionally comprised between 2020 and 2060 mV, still more optionally equal to approximately 2040 mV.

According to an additional aspect of the invention, said sub-step A2.9 of increasing or said sub-step A2.12 of reducing the value of the luminous intensity Iᵢₙ of said at least one substantially monochromatic beam, can comprise one step of adjustment of a PWM modulation of a driving signal for one emitting device, configured for the implementation of said sub-step A2.2 and said step D of said method.

According to another aspect of the invention, said method can comprise one preliminary step A1 of selecting one wavelength λ₀, between one plurality of wavelengths, for said at least one substantially monochromatic beam to be generated at said step C.

According to a further aspect of the invention, said plurality of wavelengths can comprise three wavelengths λ₀ᵢ, with i = 1, ..., 3, that belong to the spectrum of visible light and/or ultraviolet.

It is further a specific object of the invention, a system for the spectrophotometric analysis of a sample of a liquid solution in a measurement chamber, wherein said measurement chamber is selectively in fluid communication with a duct of a hydraulic circuit, wherein said liquid solution flows, and delimits at least one inlet opening and at least one outlet opening, wherein the at least one inlet opening is configured so that at least one substantially monochromatic beam enters the measurement chamber and is transmitted along one optical path of said measurement chamber, and the at least one outlet opening is configured to ensure that said at least one substantially monochromatic beam exits the measurement chamber at the end of the optical path, the system comprising:
- at least one supplying group of said sample of liquid solution, configured to supply said sample of said liquid solution into said measurement chamber, from said duct of said hydraulic circuit;
- at least one emitting device, configured for generating said substantially monochromatic beam at said at least one inlet opening of said measurement chamber and emitting said substantially monochromatic beam at said at least one inlet opening of said measurement chamber, along said optical path;
- at least one feeding group of one reagent substance into said at least one measurement chamber, configured for feeding and mixing said at least one reagent substance in said at least one measurement chamber;
- at least one detecting device, configured for detecting said substantially monochromatic beam at said at least one outlet opening of said measurement chamber, a the end of said optical path;
- at least one control and processing unit, operatively connected to said at least one emitting device and said at least one detecting device and said at least one feeding group, and configured together with said at least one emitting device, said at least one detecting device, and to said at least one feeding group to carry out the method above.

According to another aspect of the invention, said measurement chamber is optionally closed and said at least one emitting device comprises at least one plate element supporting one plurality of photo-transmitting devices of the SMD LED type, optionally three, each one configured to emit a different wavelength λ₀ᵢ.

According to a further aspect of the invention, said plate element supports said plurality of photo-transmitting devices in such a way that they face said at least one inlet opening of said measurement chamber, substantially aligned with said optical path or misaligned with respect thereto by an angle not greater than about 20°, optionally not exceeding 10°.

The present invention will be now described, for illustrative but not limiting purposes, according to its preferred embodiments, with particular reference to the Figures of the accompanying drawings, wherein:
Figure 1 shows a flow diagram of the main steps of a the method for the spectrophotometric analysis of a sample of a liquid solution, according to the present invention;
Figure 2 is a flow chart of one detail of one of the main steps of the method of Figure 1;
Figure 3 illustrates a block diagram of the main blocks of a system for the spectrophotometric analysis of a sample of liquid solution according to the method of Figure 1; and
Figure 4 shows a schematic plan view of a device for emitting a substantially monochromatic beam of the system according to the present invention.

In the enclosed Figures the same reference numerals will be used for similar elements.

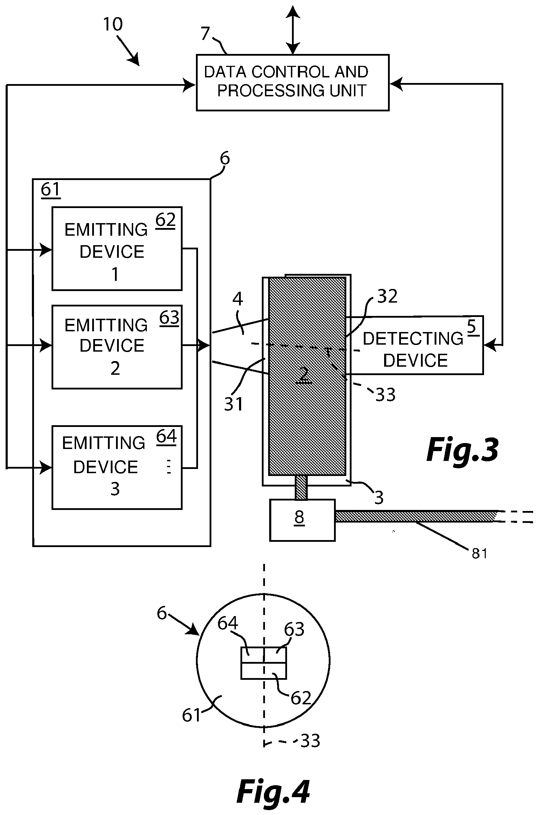

With particular reference to Figure 3, it is pointed out that the method of the present invention is advantageously applicable to a sample 2 of a liquid solution in a measurement chamber 3, which measurement chamber 3 is selectively in fluid communication with a duct 81 of a hydraulic circuit, within which the liquid solution flows, optionally with a constant flow rate.

The measurement chamber 3 is in fact configured to receive in input, in a way known to the person skilled in the art, one sample of that liquid solution (from duct 81) through the actuation of a supplying group 8 comprising devices for selective opening-closing of the duct 81, for example one solenoid valve or a manually operated valve.

The measurement chamber 3 defines at least one inlet opening 31 and at least one outlet opening 32. The inlet opening 31 is configured to ensure that at least one substantially monochromatic beam 4, generated by a suitable emitting device 6, can enter into the measurement chamber 3 and is transmitted along an optical path 33 of the measurement chamber 3, and the at least one outlet opening 32 is configured to ensure that at least one substantially monochromatic beam 4 can exit the measurement chamber 3 and is detected by a suitable detecting device 5, at the end of the optical path 33.

According to a preferred variant of the invention, measurement chamber 3 is formed inside one base made of black PVC and is a substantially closed chamber, in the sense that it is configured in such a way that its interior is not reached by any luminous radiation with the exception of the substantially monochromatic beam 4 generated during execution of the method according to the invention. The measurement chamber 3 is shaped so as to support one glass container, having circular cross-section with an internal diameter of about 14 mm and wall thickness of about 4 mm, inside which the sample 2 of liquid solution to be analysed can be delivered, in a way known to the person skilled in the art. It should however be understood that the dimensions of the glass container are not essential characteristics of the invention and the method of the present invention also applies to glass containers of different sizes, expected that the method is properly calibrated based on the length of the optical path 33 travelled by substantially monochromatic beam 4 in the sample 2 of liquid solution to be analysed, contained in said container.

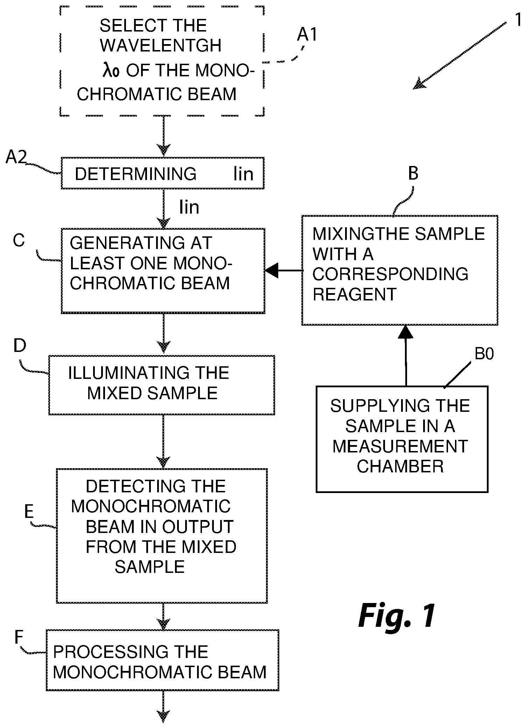

The method of the present invention, indicated with reference numeral 1 in Figure 1 therefore comprises the following operating steps:
B0. supplying one sample 2 of liquid solution into measurement chamber 3, from duct 81 of the hydraulic circuit with which measurement chamber 3 is selectively in fluid communication;
B. in measurement chamber 3, mixing the sample 2 of liquid solution with a corresponding reagent substance;
C. generating at least one substantially monochromatic beam 4 of wavelength λ₀, corresponding to one compound obtained by reaction of a substance of interest to be quantified, contained in the sample 2 of liquid solution, with said reagent substance;
D. illuminating sample 2 of the so mixed liquid solution, with at least one substantially monochromatic beam 4, through one inlet opening 31 of said measurement chamber 3, along optical path 33;
E. detecting the at least one substantially monochromatic beam 4, at the end of optical path 33, through the outlet opening 32 of measurement chamber 3; and
F. processing the substantially monochromatic beam 4 thereby detected, to determine the concentration of the substance of interest to be quantified.

It is easy to understand how step B and step C of method 1 can be performed either in parallel or in sequence, even in reverse order with respect to that shown in Figure 1, provided that prior to the execution of step D, the sample 2 of liquid solution is adequately mixed with the reagent substance added thereto, so that high absorption compounds briefly described above are produced, obtained by the reaction between the reagent substance with the substance of interest to be quantified in sample 2.

According to a particularly advantageous aspect of the present invention, method 1 provides that at step C the substantially monochromatic beam 4 is generated at the inlet opening 31 of the measurement chamber, and that at step E the substantially monochromatic beam 4 is detected at the outlet opening 32 of the measurement chamber, so that the optical path 33 travelled by the substantially monochromatic beam 4 has a length substantially corresponding to the linear distance between the inlet opening 31 and the outlet opening 32.

This fact and/or the fact that, according to the preferred embodiment described above, the measurement chamber is substantially closed, advantageously allows minimizing any artefacts due to unwanted optical reflections that could compromise the detection by detecting device 5, which reflections could occur inside the measurement chamber, if the emitting device 6 and the detecting device 5 were at a distance with respect to the respective inlet opening 31 and outlet opening 32 and/or if other light radiation besides the one emitted by the emitting device 6 reaches the measurement chamber and the detecting device 5.

According to a further particularly advantageous aspect of the invention, method 1 comprises one step A2, prior to step C of generation of the substantially monochromatic beam 4, wherein the luminous intensity Iᵢₙ of the substantially monochromatic beam 4 to be generated the step C is determined, based on the state of cleanliness of the measurement chamber 3 containing sample 2 to be analysed and/or the state of ageing of the emitting device 6 and detecting device 5, configured for the emission and detection of the substantially monochromatic beam 4, respectively. More in particular, step A2 allows setting up the value of the luminous intensity Iᵢₙ of the substantially monochromatic beam 4 in such a way that the dirtier the measurement chamber 3 and/or the greater the ageing state of the aforesaid emitting device 6 and/or of said detecting device 5, the higher is the luminous intensity Iᵢₙ of the generated substantially monochromatic beam 4.

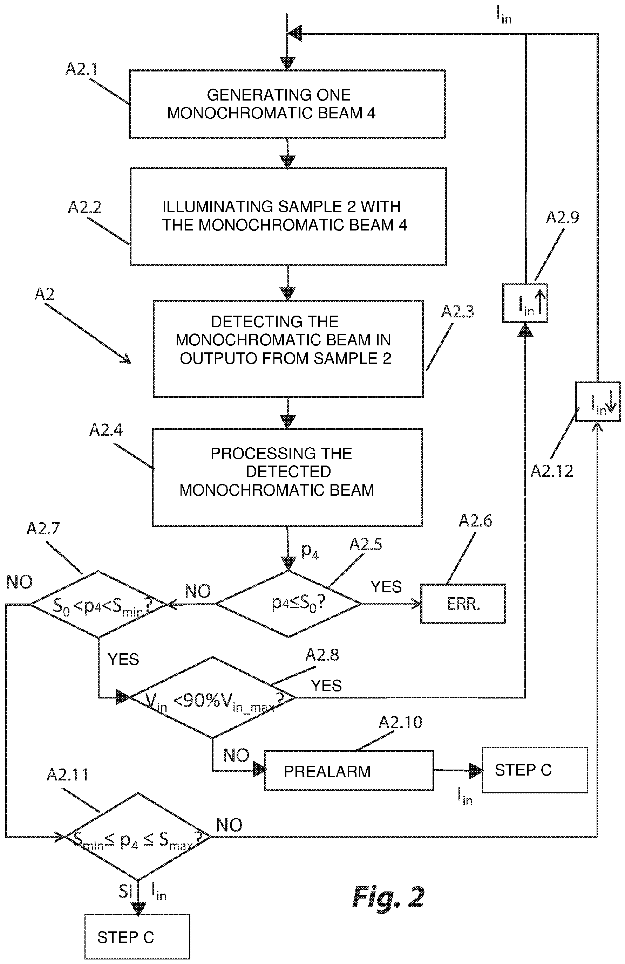

The luminous intensity Iᵢₙ of the substantially monochromatic beam 4 is determined by performing one "no-load" measurement in measurement chamber 3, according to the operational steps shown in the following with reference to Figure 2.

In this regard it must be borne in mind that, as is known, the emitting device 6 is controlled by an excitation voltage or input Vᵢₙ ranging between a minimum value (V_{in_min}) and a maximum value (V_{in_max}) and that, depending on the value of the excitation voltage applied to the emitting device 6, comprised in the range between V_{in_min} and V_{in_max}, hereinafter referred to also as ΔVᵢₙ, the emitting device 6 emits one substantially monochromatic light beam 4 of luminous intensity Iᵢₙ dependent on, optionally proportional to, the value of the applied excitation voltage Vᵢₙ.

Returning then to the "no-load" measurement, it will be noted that in an initial sub-step A2.1 of step A2, the method according to the present invention comprises controlling the emitting device 6 by applying one excitation voltage Vᵢₙ, between V_{in_min} and V_{in_max}, corresponding to an optimal percentage of voltage Vᵢₙ, with respect to the full scale (i.e., with respect to V_{in_max}), optionally comprised between about 70% and 75%, at which the emitting device 6 has an optimal operation (with clean measurement chamber) in terms of efficiency, stability, with reference to light energy produced, and colour, so that it generates a corresponding substantially monochromatic beam 4 having an initial light intensity Iᵢₙ. Then, at sub-step A2.2, sample 2 of the liquid solution to be analysed (not yet mixed with the reagent substance) is illuminated with such beam along the optical path 33. Subsequently, at sub-step A2.3, the substantially monochromatic beam 4 output from the outlet opening 32 of measurement chamber 3 is detected at the end of optical path 33 and, then, at sub-step A2.4, the substantially monochromatic beam 4 thus detected is processed, in a way known to the person skilled in the art, for example after analog-to-digital conversion and filtering, obtaining at least one reference parameter p₄ for that beam.

Advantageously, the reference parameter p₄, obtained by processing the detected substantially monochromatic beam 4, is a voltage value, measured at the output from the detecting device 5 configured for the implementation of sub-step A2.3 and step E of the method according to the present invention. Of course, it would be quite obvious to the person skilled in the art to obtain a corresponding reference parameter associated to a current, rather than a voltage, as described above, measured in output from the detecting device 5.

In the method according to the present invention, reference parameter p₄ is then compared with a plurality of predetermined threshold values, in particular a first threshold value So, a second threshold value Sₘᵢₙ and a third threshold value Sₘₐₓ wherein S₀<Sₘᵢₙ<sₘₐₓ (see the sub-steps A2.5 and A2.7 and2.11 that will hereinafter be described in detail) so that:
I) if reference parameter p₄ is less than or equal to the first preset threshold value S₀ (sub-step A2.5), the method comprises emitting an error signal to the next sub-step A2.6, to indicate a fault in the system that prevents completing the "no-load" measurement procedure.
II) if reference parameter p4 is greater than the first threshold value S₀ and lower than the second threshold value Sₘᵢₙ, see sub-step A2.7, the method passes to sub-step A2.9 of increasing the value of the luminous intensity of the substantially monochromatic beam 4, by increasing the excitation voltage Vᵢₙ applied to the emitting device 6, of a certain amount, optionally approximately 10%, optionally constantly or step by step and always within range AVᵢₙ, provided it determines that the value of the excitation voltage Vᵢₙ applied to the emitting device 6 does not reach an acceptable maximum value, optionally equal to about 90% of V_{in_max} (sub-step A2.8). After the increase of the excitation voltage Vᵢₙ at sub-step A2.9 the method comprises the repetition of sub-steps A2.1 to A2.5. Clearly, in this case, the monochromatic beam which is generated at step A2.1 has a luminous intensity Iᵢₙ corresponding to that determined at method sub-step A2.9 just carried out.

With reference to the maximum excitation voltage applicable by the system, it should be noted in fact that it can happen the case wherein, while applying to the emitting device 6 the maximum voltage envisaged (for example corresponding to 90% of V_{in_max}, maximum acceptable value), due to the dirt present in the measurement chamber and/or due to the ageing both of the emitting device 6 and the detecting device 5, reference parameter p₄, that is the voltage measured at the detecting device 5, may be higher than the first threshold value S₀ but always lower than the second threshold value Sₘᵢₙ . In this case, the method of the present invention then comprises the possibility to still continue, passing to the next step C of generation of the substantially monochromatic beam, with the luminous intensity Iᵢₙ corresponding to the maximum excitation voltage applicable by the system to the emitting device 6, and emit, at the same time or immediately before or immediately after, at sub-step A2.10, a corresponding pre-alarm signal, to inform users that measurement chamber 3 begins to get dirty and corresponding maintenance tasks can be programmed in advance, managing the available resources to the best.
III) if reference parameter p₄ is greater than or equal to the second threshold value Sₘᵢₙ and less than or equal to the third threshold value Sₘₐₓ, reference is made to sub-step A2.11, the method comprises leaving unchanged the luminous intensity value of the substantially monochromatic beam and continuing to the next step C of generation of the substantially monochromatic beam with such luminous intensity Iᵢₙ.
IV) finally, if the value of reference parameter p₄ is greater than the third threshold value Sₘₐₓ, the method of the present invention comprises reducing the excitation voltage Vᵢₙ (sub-step A2.12) until parameter p₄ is not between Sₘᵢₙ and Sₘₐₓ (case (III). This event may occur, for example, at the first use of the system after the corresponding measurement chamber 3 has been cleaned or replaced, so that the excitation voltage Vᵢₙ previously supplied by the system (when the measurement chamber 3 was still dirty) is too high - for example too close to the full-scale - and at that value of the excitation voltage no optimal operating conditions in terms of efficiency, stability as regards the light energy produced and colour of the emitting device 6 are provided.

Clearly, the values of the predetermined thresholds So, Sₘᵢₙ and Sₘₐₓ depend on the type of processing performed on the substantially monochromatic beam 4 detected after having travelled across measurement chamber 3. In a preferred case, the corresponding predetermined threshold value Sₘᵢₙ is, for example, a voltage value optionally between 1600 and 2000 mV, more optionally comprised between 1700 and 1900 mV, still more optionally about 1800 mV, and the third predetermined threshold value Sₘₐₓ is a voltage value between 2000 and 2080 mV, more optionally comprised between 2020 and 2060 mV, still more optionally equal to about 2040 mV, in the case wherein the measurement chamber is clean and the beam is processed by the detecting device 5, in a way known to the person skilled in the art, by means of a 16-bit ADC device.

Similarly, the corresponding preset threshold value S₀ can be a voltage value corresponding to the voltage expected at the detecting device 5 in optimal working conditions (i.e. with clean measurement chamber and emitting device 6 and the detecting device 5 in good state of operation) when the excitation voltage Vᵢₙ applied to the emitting device 6 is about 30% of ΔVᵢₙ (i.e. V_{in_min} + 30% ^{∗}ΔVᵢₙ). That threshold value S₀ is optionally comprised between 550 and 750 mV, more optionally comprised between 600 and 700 mV, still more optionally equal to about 650 mV, always in the case wherein the beam is processed by the detecting device 5, in a way known to the person skilled in the art, by means of a 16-bit ADC device.

According to the method of the present invention, as already explained above, when it is detected that reference parameter p₄, that is the voltage measured at the detecting device 6, is lower than the first threshold value S₀ (sub-step A2.5) the method of the present invention comprises the emission of an error signal (sub-step A2.6) indicating that the measurement chamber 3 is dirty and/or the emitting device 6 and/or the detecting device 5 does not work correctly, so that a replacement operation is necessary.

According to another particularly advantageous aspect of the invention, the increment of the intensity value Iᵢₙ of the substantially monochromatic beam 4 at sub-phase A2.9 (by increasing or decreasing, depending on the case, the excitation voltage of the emitting device 6 in a corresponding way) can be obtained by varying the modulation (PWM) of a driving signal (excitation voltage Vᵢₙ) of that emitting device 6, configured for implementing sub-step A2.2 and step D of the method 1 according to the invention.

Other methods of variation of the luminous intensity Iᵢₙ of the substantially monochromatic beam 4 can be used for implementing the method of the present invention, provided that they reach the goal of increasing the luminous intensity of the substantially monochromatic beam 4 generated at step C.

According to one aspect of the present invention, method 1 advantageously also comprises another preliminary step A1, to be carried out before step A2, of selection of a wavelength, among a plurality of predetermined wavelengths, for the substantially monochromatic beam 4 to be generated at step C.

In an particularly preferred implementation of the method of the present invention, the plurality of wavelengths comprises three wavelengths belonging to the visible light spectrum and/or ultraviolet, which are for example approximately equal to 360 nm, 445 nm and 520 nm, but it is obvious that the wavelengths can be different depending on the spectrophotometric analysis to be performed on sample 2 of liquid solution to be analysed and that their value is not limited in the present description.

With such a method, it is clear that, thanks to the possibility of selecting the wavelength of the substantially monochromatic beam 4 the system can generate, and being it possible to vary its luminous intensity Iᵢₙ based on the state of cleanliness of the measurement chamber 3 containing the sample 2 of liquid solution to be analysed and/or wear of the emitting device 6 and detecting device 5, the above mentioned drawbacks are solved, because it is not only possible, with the same reagent, to perform different types of spectrophotometric analysis with a single system, based on the wavelength of the substantially monochromatic beam 4 emitted by the system, but it is also possible to lengthen the time foreseen between one maintenance intervention and the next one, because the system is calibrated each time based on the conditions of cleanliness the measurement chamber 3 and/or the wear condition of the emitting device and detecting device and allows, within certain limits, obtaining reliable measurements anyway.

Such a method can be advantageously realized by means of a system, indicated with the reference number 10 in Figure 3, which can be combined to one measurement chamber 3 of the type already described above, comprising:
- at least one supplying group 8 of one sample 2 of liquid solution, configured to supply said sample 2 of liquid solution into measurement chamber 3, from duct 81 of an hydraulic circuit, with which the measurement chamber 3 is selectively in fluid communication;
- at least one emitting device 6, configured for generating a substantially monochromatic beam 4 at the inlet opening 31 of the measurement chamber 3 and emitting the substantially monochromatic beam 4 at the inlet opening 31 of the measurement chamber 3, along the optical path 33;
- at least one supplying group (not shown in the drawings) in the measurement chamber 3 of one reagent substance, configured for supplying and mixing the reagent substance in the measurement chamber 3;
- at least one detecting device 5, configured for detecting the substantially monochromatic beam 4 at said at least one outlet opening 32 of the measurement chamber 3, a the end of said optical path 33;
- at least one control and processing unit 7, operatively connected to the emitting device 6, the detecting device 5 and the supplying group, and configured together with the emitting device 6, the detecting device 5, and the supplying group for carrying out the method described above.

According to a preferred embodiment of the invention, in the black PVC base, within which the measurement chamber 3 is formed, the emitting device 6 and the detecting device 5 are also housed. More particularly, the emitting device 6 is housed in the base at the inlet opening 31 of the measurement chamber, so that the substantially monochromatic beam 4 is generated at the inlet aperture 31 of the measurement chamber and the detecting device 5 is housed in the base at the outlet opening 32 of the measurement chamber, so that the substantially monochromatic beam 4 is detected at the outlet opening 32 of the measurement chamber, after having travelled an optical path 33 of length substantially corresponding to the linear distance between the inlet opening 31 and the outlet opening 32.

This fact together or alternatively to the fact that, according to the preferred variant the measurement chamber is substantially closed, advantageously allows minimizing any artefacts due to unwanted optical reflections that could compromise the detection by detecting device 5, which reflections could occur inside the measurement chamber, if the emitting device 6 and the detecting device 5 were at a distance with respect to the respective inlet 31 and outlet 32 openings and/or if other light radiation besides the one emitted by the emitting device 6 reached the measurement chamber and the detecting device 5.

In this regard, the emitting device 6 advantageously comprises one plate element 61 (i.e. a printed circuit board), optionally having circular shape, optionally with a diameter equal to about 14 mm, comprising one plurality of photo-emitters devices, optionally of the SMD LED type mounted thereon, optionally three (62, 63 and 64), each configured for emitting a substantially monochromatic beam at a different wavelength λ₀ᵢ with i = 1, ..., N, where optionally N=3.

Plate element 61 is configured so as to be placed at the inlet opening 31 of the measurement chamber 3 and for supporting the plurality of photo-emitters (62, 63 and 64) in such a way that they are facing the measurement chamber 3, substantially aligned with the optical path 33 or misaligned with respect thereto by an angle not greater than 20°, optionally not greater than 10°, whereby the detecting device 5 is always capable of detecting a substantially monochromatic beam 4, transmitted through the measurement chamber by each photo-emitter. In any case, according to an advantageous aspect of the invention, the plurality of photo-emitters (62, 63 and 64) is mounted on plate 61 and arranged at the inlet opening 31 of the measurement chamber 3 so that the substantially monochromatic beam 4 that can be emitted by each one of the photo-emitters can hit detecting device 5, during the operation of system 10, substantially at a region of optimal detection of the detecting device 5, the region optionally comprising an area on the detecting device 5 around a point of maximum detection (not shown in the figures), which is substantially circular and of diameter optionally lower or equal to 1 mm, more optionally less than or equal to 0.75 mm, still more optionally less than or equal about 0.5 mm. An example of one photo-emitter that can be advantageously used in the present invention is an UV LED marketed by NICHIA CORPORATION company with NSSU100CT code.

According to a further preferred implementation of the invention, the detecting device 5 is chosen so that, irrespective of the value of luminous intensity Iᵢₙ of the detected substantially monochromatic beam 4, it works in a linear operational area.
An example of a detecting device 5 advantageously usable in the system 10 of the present invention is given by a pre-amplified photo-sensor, for example of the type marketed by HAMAMATSU company, code S9648, capable of detecting the substantially monochromatic beam 4 received at the outlet opening 32 of the measurement chamber 3, regardless of the wavelength thereof.

Alternatively to the photo-sensor mentioned above, the system 10 of the present invention may also employ a photonic integrated circuit (or fotolC) or a photo transistor having characteristics suitable for the purpose.

Optionally, the control and processing unit 7, which controls and coordinates the other components of the system 10 for the execution of the method 1 described above, comprises at least one input/output group for connection of the system to an external display and/or one keyboard and/or other remote device, through wired or wireless connection, with which an operator can interact with the system. For example, an operator can set the threshold values S or display on the display the values of the luminous intensity Iₒᵤₜ detected by the system or can display on the display the pattern of the concentrations measured in the sample 2 of liquid solution by the same system, by means of the implementation of the method described above, or again it can select the wavelength λ₀ᵢ of substantially monochromatic beam 4 to be generated for the execution of the spectrophotometric analysis.

As it can be easily understood and as already said above, the method and system described above solve all drawbacks described in the preamble because, thanks to the possibility of selecting the wavelength of the substantially monochromatic beam 4 the system can generate, and being it possible to vary its luminous intensity Iᵢₙ based on the state of cleanliness of the measurement chamber 3 containing the sample 2 of liquid solution to be analysed and/or wear of the emitting device and detecting device, it is not only possible, with an equal reagent, to perform different types of spectrophotometric analysis with a single system, based on the wavelength of the substantially monochromatic beam 4 emitted by the system, but it is also possible to lengthen the time foreseen between one maintenance intervention and the next one, because the system is calibrated each time based on the conditions of cleanliness of the measurement chamber 3 and/or wear condition of the emitting device and detecting device and allows, within certain limits, obtaining reliable measurements anyway. Not only that, thanks to the emission of error signals, it is possible to detect in advance any malfunction of the system and thus program in advance the necessary maintenance operations.

In the foregoing the preferred embodiments were described and some modifications of the present invention were suggested, but it should be understood that those skilled in the art can make modifications and changes without departing from the relative scope of protection, as defined by the appended claims.

Thus, for example, the method described above can be carried out both manually or automatically by means of instructions stored in the control and processing unit 7 and executed by a processor included in said control and processing unit, or stored on one support external to the system 10, but readable by the control and processing unit 7, which when they are executed, they cause the implementation of the method 1 described above.

In this respect, it should be noted that the method of the present invention does not provide for a quantitative determination of the state of cleanliness of the measurement chamber 3 containing sample 2 to be analysed or the state of ageing of the emitting device 6 and detecting device 5 but, as described above, is based on the assumption that when, in the system, a "no-load" measurement is performed, any differences between the signal delivered by the emitting device 6 and the signal detected by the detecting device 5 can only be due to the state of cleanliness of the measurement chamber 3 containing sample 2 to be analysed, which may be more or less dirty because of any particles in suspension in the liquid solution of water to be analysed which deposit, when time passes by, on the walls of the measurement chamber itself and/or the state of ageing of the emitting device 6 and detecting device 5, so that the reduction of the signal detected at the detecting device 5 will be compensated according to the method described above by increasing the luminous intensity (Iᵢₙ) of the substantially monochromatic beam 4 emitted by the emitting device 6, up to a level allowing the detecting device 5 to properly detect the received signal.
system, but it is also possible to lengthen the time foreseen between one maintenance intervention and the next one, because the system is calibrated each time based on the conditions of cleanliness of the measurement chamber 3 and/or wear condition of the emitting device and detecting device and allows, within certain limits, obtaining reliable measurements anyway. Not only that, thanks to the emission of error signals, it is possible to detect in advance any malfunction of the system and thus program in advance the necessary maintenance operations.

In the foregoing the preferred embodiments were described and some modifications of the present invention were suggested, but it should be understood that those skilled in the art can make modifications and changes without departing from the scope of protection, as defined by the appended claims.

Thus, for example, the method described above can be carried out both manually or automatically by means of instructions stored in the control and processing unit 7 and executed by a processor included in said control and processing unit, or stored on one support external to the system 10, but readable by the control and processing unit 7, which when they are executed, they cause the implementation of the method 1 described above.

In this respect, it should be noted that the method of the present invention does not provide for a quantitative determination of the state of cleanliness of the measurement chamber 3 containing sample 2 to be analysed or the state of ageing of the emitting device 6 and detecting device 5 but, as described above, is based on the assumption that when, in the system, a "no-load" measurement is performed, any differences between the signal delivered by the emitting device 6 and the signal detected by the detecting device 5 can only be due to the state of cleanliness of the measurement chamber 3 containing sample 2 to be analysed, which may be more or less dirty because of any particles in suspension in the liquid solution of water to be analysed which deposit, when time passes by, on the walls of the measurement chamber itself and/or the state of ageing of the emitting device 6 and detecting device 5, so that the reduction of the signal detected at the detecting device 5 will be compensated according to the method described above by increasing the luminous intensity (Iᵢₙ) of the substantially monochromatic beam 4 emitted by the emitting device 6, up to a level allowing the detecting device 5 to properly detect the received signal.

## Claims

1. Method (1) for the spectrophotometric analysis of a sample (2) of a liquid solution in a measurement chamber (3), wherein said measurement chamber (3) is selectively in fluid communication with a duct (81) of an hydraulic circuit in which said liquid solution flows, said measurement chamber delimiting at least one inlet opening (31) and at least one outlet opening (32), in which the at least one inlet opening (31) is configured so that at least one substantially monochromatic beam (4), configured to be generated by at least one voltage controllable emitting device (6) through at least one excitation voltage (Vᵢₙ) between one minimum value (V_{in_min}) and one maximum value (V_{in_max}), enters the measurement chamber (3) and is transmitted along one optical path (33) of said measurement chamber (3), and the at least one outlet opening (32) is configured so that said at least one substantially monochromatic beam (4) exits the measurement chamber (3) at the end of the optical path (33) and can be detected by at least one detecting device (5) configured for the detection of said at least one substantially monochromatic beam (4), the method comprising the following steps of:
B0. supplying said at least one sample (2) of said liquid solution into said measurement chamber (3) from said duct (81) of the hydraulic circuit, with which said measurement chamber (3) is selectively in fluid communication;
B. mixing said at least one sample (2) of said liquid solution with a corresponding reagent substance in said measurement chamber (3);
C. generating at least one substantially monochromatic beam (4) of luminous intensity (Iᵢₙ) and wavelength λ (₀), wherein said wavelength (λ₀) corresponds to one compound obtained by the reaction of a substance of interest to be quantified, contained in said sample (2) of said thus mixed liquid solution with said corresponding reagent substance;
D. illuminating, by means of said at least one emitting device (6), said sample (2) of said thus mixed liquid solution, with said at least one substantially monochromatic beam (4), through said at least one inlet opening (31) of said measurement chamber (3), along said optical path (33);
E. detecting said at least one substantially monochromatic beam (4), at the end of said optical path (33), through said at least one outlet opening (32) of said measurement chamber (3); and
F. processing said at least one substantially monochromatic beam (4) thus detected, to determine the concentration of the said substance to be quantified;
wherein
said at least one substantially monochromatic beam (4) is generated at said at least one inlet opening (31) of said measurement chamber, and said at least one substantially monochromatic beam (4) is detected at said at least one outlet opening (32) of said measurement chamber, so that said optical path (33) has a length substantially corresponding to the linear distance between said at least one inlet opening (31) and said at least one outlet opening (32) and wherein said method is **characterised in that** it also comprises one step A2, preliminary to said step C, for setting the luminous intensity (Iᵢₙ) of
said substantially monochromatic beam (4), based on the cleaning state of said measurement chamber (3) and/or ageing of said at least one emitting device (6) and/or ageing of said at least one detecting device (5), whereby the worse is the cleaning state of said measurement chamber (3) and/or the greater is the ageing state of said at least one emitting device (6) and/or said at least one detecting device (5), the higher is the set luminous intensity (Iᵢₙ) of said substantially monochromatic beam (4), the set luminous intensity (Iᵢₙ) being determined by carrying out one "no-load" measurement in said measurement chamber (3), wherein
said "no-load" measurement comprises measuring a transmitted intensity of said substantially monochromatic beam through said measurement chamber (3) containing said at least one sample (2) of said liquid solution in the absence of said corresponding reagent substance.

2. Method (1) according to claim 1, wherein said "no-load" measurement comprises:
A2.1 generating said at least one substantially monochromatic beam (4) having an initial luminous intensity Iᵢₙ;
A2.2 illuminating said sample (2) of said liquid solution, with said at least one substantially monochromatic beam (4), along said optical path (33);
A2.3 detecting said at least one substantially monochromatic beam (4), at the end of said optical path (33); and
A2.4 processing said at least one substantially monochromatic beam (4) thus detected, thereby obtaining at least one reference parameter (p₄), wherein said at least one reference parameter (p₄) is a measured voltage value in output from said at least one detecting device (5), and
A2.5 comparing said at least one reference parameter (p4) with at least one predetermined first threshold value (S₀) whereby if said at least one reference parameter (p₄) is less than or equal to said at least one predetermined first threshold value (S₀), said method comprises
A2.6 emitting at least one error signal, to indicate a fault that prevents form completing said at least one "no-load" measurement.

3. Method (1) according to claim 2, wherein:
A2.7 if said at least one reference parameter (p₄) is greater than said at least one a first threshold value (S₀) and lower than at least one second threshold value (Sₘᵢₙ) with S₀<Sₘᵢₙ, and
A2.8 if said at least one excitation voltage (Vᵢₙ) applied to said at least one emitting device (6) is lower than an acceptable maximum value, optionally equal to approximately 90% of V_{in_max},
said method comprises
A2.9 increasing the value of the luminous intensity (Iᵢₙ) of said at least one substantially monochromatic beam (4), by increasing said at least one excitation voltage (Vᵢₙ) applied to said at least one emitting device (6), and repeating said sub-steps A2.1 to A2.5, wherein said at least one monochromatic beam generated at said sub-step A2.1 has a luminous intensity (Iᵢₙ) corresponding to that determined at said sub-step A2.9 just performed.

4. Method (1) according to claim 3, wherein said step of increasing the value of the luminous intensity (Iᵢₙ) of said at least one substantially monochromatic beam (4), comprises increasing said at least one excitation voltage (Vᵢₙ) of a certain percentage, optionally equal to 10%, optionally in a constant way or at set intervals.

5. Method (1) according to claim 3 or 4, wherein:
A2.7 if said at least one reference parameter (p₄) is greater than said at least one first threshold value (S₀) and lower than said at least one second threshold value (Sₘᵢₙ) with S₀<Sₘᵢₙ,
and
A2.8 if said at least one excitation voltage (Vᵢₙ) applied to said at least one emitting device (6) is higher or equal to an acceptable maximum value, optionally equal to approximately 90% of V_{in_max}, said method comprises switching to said step C of generation of said at least one substantially monochromatic beam (4) with the luminous intensity Iᵢₙ corresponding to acceptable maximum value, and emitting (A2.10), a corresponding early warning signal, to inform that said at least one measurement chamber (3) is starting to get dirty and the corresponding maintenance activities can be programmed.

6. Method (1) according to any one of claims 2 to 5, wherein:
A2.11 if said at least one reference parameter (p₄) is greater than said at least one second threshold value (Sₘᵢₙ) and lower or equal to at least one third threshold value (Sₘₐₓ) with Sₘᵢₙ<Sₘₐₓ, said method comprises switching to said step C wherein the value of the luminous intensity (Iᵢₙ) of the substantially monochromatic beam (4) corresponds to the luminous intensity value I_{IN} of the substantially monochromatic beam at said sub-step A2.1 just performed.

7. Method (1) according to any one of claims 2 to 6, wherein:
A2.11 if said at least one reference parameter (p₄) is greater than said at least one third threshold value (Sₘₐₓ), said method comprises
A2.12 reducing the value of the luminous intensity (Iᵢₙ) of said at least one substantially monochromatic beam (4), by reducing said at least one excitation voltage (Vᵢₙ) applied to said at least one emitting device (6), and repeating said sub-steps A2.1 to A2.5, wherein said at least one monochromatic beam generated at said sub-step A2.1 has a luminous intensity (Iᵢₙ) corresponding to that determined at said sub-step A2.12 just performed.

8. Method (1) according to claim 7, wherein said at least one predetermined first threshold value (S₀) is a voltage value corresponding to a voltage expected at said at least one detecting device (5) when said at least one excitation voltage (Vᵢₙ) applied to said at least one emitting device (6) is approximately equal to V_{in_min}+( 30 % (V_{in_max} - V_{in_min})) and is optionally comprised between 550 and 750 mV, more optionally comprised between 600 and 700 mV,A still more optionally approximately 650 mV and/or wherein said at least one predetermined second threshold value (Sₘᵢₙ) is a voltage value between 1600 and 2000 mV, more optionally comprised between 1700 and 1900 mV, still more optionally about 1800 mV and/or wherein said at least one predetermined third threshold value (Sₘₐₓ) is a voltage value between 2000 and 2080 mV, more optionally comprised between 2020 and 2060 mV, still more optionally equal to approximately 2040 mV.

9. Method (1) according to any one of claims 2 to 8, wherein said sub-step A2.9 of increasing or said sub-step A2.12 of reducing the value of the luminous intensity (Iᵢₙ) of said at least one substantially monochromatic beam (4), comprises one step of adjustment of a PWM modulation of a driving signal of one emitting device (6), configured for the implementation of said sub-step A2.2 and said step D of said method.

10. Method (1) according to any one of the preceding claims, comprising one preliminary step A1 of selecting one wavelength ( λ₀), between one plurality of wavelengths, for said at least one substantially monochromatic beam (4) to be generated at said step C.

11. Method (1) according to claim 10, wherein said plurality of wavelengths comprises three wavelengths (λ₀ᵢ), with i = 1, ..., 3, that belong to the spectrum of visible light and/or ultraviolet.

12. System (10) for the spectrophotometric analysis of a sample (2) of a liquid solution, the system comprising a measurement chamber (3), wherein said measurement chamber is configured to be connected selectively in fluid communication with a duct (81) of an hydraulic circuit in which said liquid solution flows, wherein the measurement chamber (3) has at least one inlet opening (31) and at least one outlet opening (32), in which the at least one inlet opening (31) is configured so that at least one substantially monochromatic beam (4) enters the measurement chamber (3) and is transmitted along one optical path (33) of said measurement chamber (3), and the at least one outlet opening (32) is configured to ensure that said at least one substantially monochromatic beam (4) exits the measurement chamber (3) at the end of the optical path (33), the system comprising:
- at least one supplying group (8) of said sample (2) of liquid solution, configured to supply said sample (2) of said liquid solution into said measurement chamber (3), from said duct (81) of said hydraulic circuit;
- at least one emitting device (6), configured for generating said substantially monochromatic beam (4) at said at least one inlet opening (31) of said measurement chamber (3) and emitting said substantially monochromatic beam (4) at said at least one inlet opening (31) of said measurement chamber (3), along said optical path (33);
- at least one feeding group of one reagent substance into said at least one measurement chamber (3), configured for feeding and mixing said at least one reagent substance in said at least one measurement chamber (3);
- at least one detecting device (5), configured for detecting said substantially monochromatic beam (4) at said at least one outlet opening (32) of said measurement chamber (3), a the end of said optical path (33);
- at least one control and processing unit (7), operatively connected to said at least one emitting device (6) and said at least one detecting device (5) and said at least one feeding group, and configured together with said at least one emitting device (6), said at least one detecting device (5), and to said at least one feeding group to carry out the method according to any one of claims 1 to 11.

13. System (10) according to claim 12, wherein said measurement chamber is optionally closed and wherein said at least one emitting device (6) comprises at least one plate element (61) supporting one plurality of photo-transmitting devices (62, 63, 64) of the SMD LED type, optionally three, each one configured to emit a different wavelength λ₀ᵢ.

14. System according to claim 13, wherein said plate element (61) supports said plurality of photo-transmitting devices (62, 63, 64) in such a way that they face said at least one inlet opening (31) of said measurement chamber (3), substantially aligned with said optical path (33) or misaligned with respect thereto by an angle not greater than about 20°, optionally not exceeding 10°.

## Patentansprüche

1. Verfahren (1) zur spektrophotometrischen Analyse einer Probe (2) einer flüssigen Lösung in einer Messkammer (3), wobei die Messkammer (3) selektiv in Fluidverbindung mit einer Leitung (81) eines Hydraulikkreislaufs steht, in dem die flüssige Lösung fließt, wobei die Messkammer mindestens eine Einlassöffnung (31) und mindestens eine Auslassöffnung (32) begrenzt, wobei die mindestens eine Eintrittsöffnung (31) so gestaltet ist, dass mindestens ein im Wesentlichen monochromatisches Strahlenbündel (4), das so gestaltet ist, dass es von mindestens einer spannungssteuerbaren Sendevorrichtung (6) durch mindestens eine Erregerspannung (Vᵢₙ) zwischen einem Minimalwert (V_{in_min}) und einem Maximalwert (V_{in_max}) erzeugt wird in die Messkammer (3) eintritt und entlang eines optischen Weges (33) der Messkammer (3) übertragen wird, und die mindestens eine Austrittsöffnung (32) so ausgebildet ist, dass der mindestens eine im Wesentlichen monochromatische Strahl (4) am Ende des optischen Weges (33) aus der Messkammer (3) austritt und von mindestens einer Detektionseinrichtung (5), die zur Detektion des mindestens einen im Wesentlichen monochromatischen Strahls (4) ausgebildet ist, detektiert werden kann, wobei das Verfahren die folgenden Schritte umfasst:
B0. Zuführen der mindestens einen Probe (2) der flüssigen Lösung in die Messkammer (3) aus der Leitung (81) des Hydraulikkreises, mit der die Messkammer (3) selektiv in Fluidverbindung steht;
B. Mischen der mindestens einen Probe (2) der flüssigen Lösung mit einer entsprechenden Reagenzsubstanz in der Messkammer (3);
C. Erzeugen mindestens eines im Wesentlichen monochromatischen Strahls (4) mit einer Lichtstärke (Iᵢₙ) und einer Wellenlänge λ (0), wobei die Wellenlänge (λ₀) einer Verbindung entspricht, die durch die Reaktion einer zu quantifizierenden Substanz von Interesse, die in der Probe (2) der so gemischten flüssigen Lösung enthalten ist, mit der entsprechenden Reagenzsubstanz erhalten wird;
D. Beleuchten der Probe (2) der so gemischten flüssigen Lösung mit dem mindestens einen im Wesentlichen monochromatischen Strahl (4) durch die mindestens eine Einlassöffnung (31) der Messkammer (3) entlang des optischen Weges (33) mit Hilfe der mindestens einen Emissionsvorrichtung (6);
E. Erfassen des mindestens einen im Wesentlichen monochromatischen Strahls (4) am Ende des optischen Weges (33) durch die mindestens eine Auslassöffnung (32) der Messkammer (3); und
F. die Verarbeitung des mindestens einen auf diese Weise detektierten, im Wesentlichen monochromatischen Strahls (4), um die Konzentration der zu quantifizierenden Substanz zu bestimmen;
wobei das mindestens eine im Wesentlichen monochromatische Strahlenbündel (4) an der mindestens einen Einlassöffnung (31) der Messkammer erzeugt wird und das mindestens eine im Wesentlichen monochromatische Strahlenbündel (4) an der mindestens einen Auslassöffnung (32) der Messkammer detektiert wird, so dass der optische Pfad (33) eine Länge aufweist, die im Wesentlichen dem linearen Abstand zwischen der mindestens einen Einlassöffnung (31) und der mindestens einen Auslassöffnung (32) entspricht, und
wobei das Verfahren **dadurch gekennzeichnet ist, dass** es auch einen Schritt A2 umfasst, der dem Schritt C vorausgeht, um die Lichtstärke (Iᵢₙ) des im Wesentlichen monochromatischen Strahls (4) auf der Grundlage des Reinigungszustands der Messkammer (3) und/oder der Alterung der mindestens einen Sendevorrichtung (6) und/oder der Alterung der mindestens einen Erfassungsvorrichtung (5) einzustellen,
wobei die eingestellte Lichtstärke (I) des im Wesentlichen monochromatischen Strahls (4) umso höher ist, je schlechter der Reinigungszustand der Messkammer (3) und/oder je höher der Alterungszustand der mindestens einen Sendevorrichtung (6) und/oder der mindestens einen Erfassungsvorrichtung (5) ist, je höher die eingestellte Lichtstärke (Iᵢₙ) des im Wesentlichen monochromatischen Strahls (4) ist, wobei die eingestellte Lichtstärke (Iᵢₙ) durch Ausführen einer "Leerlauf"-Messung in der Messkammer (3) bestimmt wird, wobei die "Leerlauf"-Messung das Messen einer transmittierten Intensität des im Wesentlichen monochromatischen Strahls durch die Messkammer (3), die die mindestens eine Probe (2) der flüssigen Lösung enthält, in Abwesenheit der entsprechenden Reagenzsubstanz umfasst.

2. Verfahren (1) nach Anspruch 1, wobei die "Leerlauf"-Messung umfasst:
A2.1 Erzeugen des mindestens einen im Wesentlichen monochromatischen Strahls (4) mit einer Anfangslichtstärke Iᵢₙ;
A2.2 Beleuchten der Probe (2) der flüssigen Lösung mit dem mindestens einen im Wesentlichen monochromatischen Strahl (4) entlang des optischen Weges (33);
A2.3 Erfassen des mindestens einen im Wesentlichen monochromatischen Strahls (4) am Ende des optischen Wegs (33); und
A2.4 Verarbeiten des mindestens einen auf diese Weise erfassten, im Wesentlichen monochromatischen Strahls (4), wodurch mindestens ein Referenzparameter (p₄ ) erhalten wird, wobei der mindestens eine Referenzparameter (p₄) ein gemessener Spannungswert am Ausgang der mindestens einen Erfassungsvorrichtung (5) ist, und
A2.5 Vergleichen des mindestens einen Referenzparameters (p4) mit mindestens einem vorbestimmten ersten Schwellenwert (So), wobei, wenn der mindestens eine Referenzparameter (p₄) kleiner oder gleich dem mindestens einen vorbestimmten ersten Schwellenwert (S₀) ist, das Verfahren umfasst
A2.6 Aussenden mindestens eines Fehlersignals, um einen Fehler anzuzeigen, der den Abschluss der mindestens einen "Leerlauf"-Messung verhindert.

3. Verfahren (1) nach Anspruch 2, wobei:
A2.7 wenn der mindestens eine Referenzparameter (p₄) größer ist als der mindestens eine erste Schwellenwert (S₀) und kleiner als mindestens ein zweiter Schwellenwert (Sₘᵢₙ) mit S₀ <Sₘᵢₙ, und
A2.8 wenn die mindestens eine Erregerspannung (Vᵢₙ), die an die mindestens eine emittierende Vorrichtung (6) angelegt wird, niedriger ist als ein akzeptabler Maximalwert, der gegebenenfalls etwa 90 % von v_{in_max} beträgt, umfasst das Verfahren
A2.9 Erhöhen des Wertes der Lichtstärke (Iᵢₙ) des mindestens einen im Wesentlichen monochromatischen Strahls (4) durch Erhöhen der mindestens einen an die mindestens eine emittierende Vorrichtung (6) angelegten Anregungsspannung (Vᵢₙ), und Wiederholen der Unterschritte A2.1 bis A2.5, wobei der mindestens eine im Unterschritt A2.1 erzeugte monochromatische Strahl eine Lichtstärke (Iᵢₙ) aufweist, die der im soeben durchgeführten Unterschritt A2.9 ermittelten Lichtstärke entspricht.

4. Verfahren (1) nach Anspruch 3, wobei der Schritt des Erhöhens des Wertes der Lichtstärke (Iᵢₙ) des mindestens einen im Wesentlichen monochromatischen Strahls (4) das Erhöhen der mindestens einen Erregerspannung (Vᵢₙ) um einen bestimmten Prozentsatz, der optional gleich 10 % ist, optional in konstanter Weise oder in festgelegten Intervallen umfasst.

5. Verfahren (1) nach Anspruch 3 oder 4, wobei:
A2.7 wenn der mindestens eine Referenzparameter (p₄) größer ist als der mindestens eine erste Schwellenwert (S₀) und kleiner als der mindestens eine zweite Schwellenwert (Sₘᵢₙ) mit S₀ <Sₘᵢₙ, und
A2.8 wenn die mindestens eine Erregerspannung (Vᵢₙ), die an die mindestens eine Sendevorrichtung (6) angelegt wird, höher oder gleich einem akzeptablen Maximalwert ist, der gegebenenfalls etwa 90 % von v_{in_max} entspricht, umfasst das Verfahren das Umschalten auf den Schritt C der Erzeugung des mindestens einen im Wesentlichen monochromatischen Strahls (4) mit der Lichtstärke Iᵢₙ, die dem akzeptablen Maximalwert entspricht, und das Aussenden (A2.10) eines entsprechenden Frühwarnsignals, um darüber zu informieren, dass die mindestens eine Messkammer (3) zu verschmutzen beginnt und die entsprechenden Wartungsaktivitäten programmiert werden können.

6. Verfahren (1) nach einem der Ansprüche 2 bis 5, wobei:
A2.11 wenn der mindestens eine Referenzparameter (p₄) größer als der mindestens eine zweite Schwellenwert (Sₘᵢₙ) und kleiner oder gleich mindestens einem dritten Schwellenwert (Sₘₐₓ) mit Sₘᵢₙ <Sₘₐₓ ist, umfasst das Verfahren das Umschalten auf den Schritt C, in dem der Wert der Lichtstärke (Iᵢₙ) des im Wesentlichen monochromatischen Strahls (4) dem Lichtstärkewert Iᵢₙ des im Wesentlichen monochromatischen Strahls bei dem soeben durchgeführten Unterschritt A2.1 entspricht.

7. Verfahren (1) nach einem der Ansprüche 2 bis 6, wobei:
A2.11 wenn der mindestens eine Referenzparameter (p₄) größer ist als der mindestens eine dritte Schwellenwert (Sₘₐₓ), umfasst das Verfahren
A2.12 Verringern des Wertes der Lichtstärke (Iᵢₙ) des mindestens einen im Wesentlichen monochromatischen Strahls (4) durch Verringern der mindestens einen an die mindestens eine emittierende Vorrichtung (6) angelegten Anregungsspannung (Vᵢₙ), und Wiederholen der Unterschritte A2.1 bis A2.5, wobei der mindestens eine im Unterschritt A2.1 erzeugte monochromatische Strahl eine Lichtstärke (Iᵢₙ) aufweist, die der im soeben durchgeführten Unterschritt A2.12 bestimmten Lichtstärke entspricht.

8. Verfahren (1) nach Anspruch 7, wobei der mindestens eine vorbestimmte erste Schwellenwert (S₀) ein Spannungswert ist, der einer Spannung entspricht, die an der mindestens einen Erfassungsvorrichtung (5) erwartet wird, wenn die mindestens eine Erregerspannung (Vᵢₙ), die an die mindestens eine Sendevorrichtung (6) angelegt wird, ungefähr gleich v_{in_min}+( 30 % (V_{in_max} - v_{in_min})) ist und optional zwischen 550 und 750 mV, mehr optional zwischen 600 und 700 mV liegt,A, noch optionaler ungefähr 650 mV, und/oder wobei der mindestens eine vorbestimmte zweite Schwellenwert (Sₘᵢₙ) ein Spannungswert zwischen 1600 und 2000 mV, noch optionaler zwischen 1700 und 1900 mV, noch optionaler ungefähr 1800 mV ist und/oder wobei der mindestens eine vorbestimmte dritte Schwellenwert (Sₘₐₓ) ein Spannungswert zwischen 2000 und 2080 mV, noch optionaler zwischen 2020 und 2060 mV, noch optionaler ungefähr 2040 mV ist.

9. Verfahren (1) nach einem der Ansprüche 2 bis 8, wobei der Unterschritt A2.9 zur Erhöhung oder der Unterschritt A2.12 zur Verringerung des Wertes der Lichtstärke (Iᵢₙ) des mindestens einen im Wesentlichen monochromatischen Strahls (4) einen Schritt zur Einstellung einer PWM-Modulation eines Ansteuersignals einer emittierenden Vorrichtung (6) umfasst, die für die Durchführung des Unterschritts A2.2 und des Schritts D des Verfahrens konfiguriert ist.

10. Verfahren (1) nach einem der vorhergehenden Ansprüche, umfassend einen vorbereitenden Schritt A1 der Auswahl einer Wellenlänge (λ₀) aus einer Vielzahl von Wellenlängen für den mindestens einen im Wesentlichen monochromatischen Strahl (4), der in Schritt C erzeugt werden soll.

11. Verfahren (1) nach Anspruch 10, wobei die Vielzahl von Wellenlängen drei Wellenlängen (λ₀ᵢ) umfasst, mit i = 1, ..., 3, die zum Spektrum des sichtbaren Lichts und/oder des Ultraviolett gehören.

12. System (10) für die spektrophotometrische Analyse einer Probe (2) einer flüssigen Lösung, **wobei** das System eine Messkammer (3) umfasst, wobei die Messkammer konfiguriert ist, um selektiv in Fluidverbindung mit einer Leitung (81) eines hydraulischen Kreislaufs verbunden zu werden, in dem die flüssige Lösung fließt, wobei die Messkammer (3) mindestens eine Einlassöffnung (31) und mindestens eine Auslassöffnung (32) aufweist, wobei die mindestens eine Einlassöffnung (31) so gestaltet ist, dass mindestens ein im Wesentlichen monochromatischer Strahl (4) in die Messkammer (3) eintritt und entlang eines optischen Weges (33) der Messkammer (3) übertragen wird, und die mindestens eine Auslassöffnung (32) so gestaltet ist, dass der mindestens eine im Wesentlichen monochromatische Strahl (4) die Messkammer (3) am Ende des optischen Weges (33) verlässt, wobei das System umfasst:
- mindestens eine Zuführungsgruppe (8) für die Probe (2) der flüssigen Lösung, die so konfiguriert ist, dass sie die Probe (2) der flüssigen Lösung von der Leitung (81) des Hydraulikkreises in die Messkammer (3) zuführt;
- mindestens eine Emissionsvorrichtung (6), die zum Erzeugen des im Wesentlichen monochromatischen Strahls (4) an der mindestens einen Einlassöffnung (31) der Messkammer (3) und zum Emittieren des im Wesentlichen monochromatischen Strahls (4) an der mindestens einen Einlassöffnung (31) der Messkammer (3) entlang des optischen Wegs (33) konfiguriert ist;
- mindestens eine Zuführungsgruppe einer Reagenzsubstanz in die mindestens eine Messkammer (3), die zum Zuführen und Mischen der mindestens einen Reagenzsubstanz in der mindestens einen Messkammer (3) konfiguriert ist;
- mindestens eine Erfassungsvorrichtung (5), die zum Erfassen des im Wesentlichen monochromatischen Strahls (4) an der mindestens einen Auslassöffnung (32) der Messkammer (3) am Ende des optischen Wegs (33) konfiguriert ist;
- mindestens eine Steuer- und Verarbeitungseinheit (7), die operativ mit der mindestens einen Sendevorrichtung (6) und der mindestens einen Erfassungsvorrichtung (5) und der mindestens einen Fütterungsgruppe verbunden ist und zusammen mit der mindestens einen Sendevorrichtung (6), der mindestens einen Erfassungsvorrichtung (5) und der mindestens einen Fütterungsgruppe konfiguriert ist, um das Verfahren nach einem der Ansprüche 1 bis 11 auszuführen.

13. System (10) nach Anspruch 12, wobei die Messkammer optional geschlossen ist und wobei die mindestens eine emittierende Vorrichtung (6) mindestens ein Plattenelement (61) umfasst, das eine Vielzahl von fototransmittierenden Vorrichtungen (62, 63, 64) des SMD-LED-Typs, optional drei, trägt, von denen jede so konfiguriert ist, dass sie eine andere Wellenlänge (λ₀ᵢ) emittiert.

14. System nach Anspruch 13, bei dem das Plattenelement (61) die mehreren lichtübertragenden Vorrichtungen (62, 63, 64) so trägt, dass sie der mindestens einen Einlassöffnung (31) der Messkammer (3) zugewandt sind, im Wesentlichen mit dem optischen Pfad (33) ausgerichtet oder in Bezug auf diesen um einen Winkel von nicht mehr als etwa 20°, optional nicht mehr als 10°, versetzt sind.

## Revendications

1. Procédé (1) d'analyse spectrophotométrique d'un échantillon (2) d'une solution liquide dans une chambre de mesure (3), dans lequel ladite chambre de mesure (3) est sélectivement en communication fluidique avec un conduit (81) d'un circuit hydraulique dans lequel circule ladite solution liquide, ladite chambre de mesure délimitant au moins une ouverture d'entrée (31) et au moins une ouverture de sortie (32), dans lequel l'au moins une ouverture d'entrée (31) est configurée pour qu'au moins un faisceau sensiblement monochromatique (4), configuré pour être généré par au moins un dispositif émetteur à commande de tension (6) à l'aide d'au moins une tension d'excitation (Vᵢₙ) comprise entre une valeur minimale (V_{in_min}) et une valeur maximale (V_{in_max}), pénètre dans la chambre de mesure (3) et est transmis le long d'un chemin optique (33) de ladite chambre de mesure (3), et l'au moins une ouverture de sortie (32) est configurée de sorte que ledit au moins un faisceau sensiblement monochromatique (4) sort de la chambre de mesure (3) à l'extrémité du chemin optique (33) et peut être détecté par au moins un dispositif détecteur (5) configuré pour la détection dudit au moins un faisceau sensiblement monochromatique (4), le procédé comprenant les étapes suivantes de:
B0. fourniture dudit au moins un échantillon (2) de ladite solution liquide dans ladite chambre de mesure (3) à partir dudit conduit (81) du circuit hydraulique, avec lequel ladite chambre de mesure (3) est sélectivement en communication fluidique;
B. mélange dudit au moins un échantillon (2) de ladite solution liquide avec une substance réactive correspondante dans ladite chambre de mesure (3);
C. génération d'au moins un faisceau sensiblement monochromatique (4) d'intensité lumineuse (Iᵢₙ) et de longueur d'onde λ (₀), dans lequel ladite longueur d'onde (λ₀) correspond à un composé obtenu par la réaction d'une substance d'intérêt à quantifier, contenue dans ledit échantillon (2) de ladite solution liquide ainsi mélangée avec ladite substance réactive correspondante;
D. éclairage, au moyen dudit au moins un dispositif émetteur (6), dudit échantillon (2) de ladite solution liquide ainsi mélangée, avec ledit au moins un faisceau sensiblement monochromatique (4), à travers ladite au moins une ouverture d'entrée (31) de ladite chambre de mesure (3), le long dudit chemin optique (33);
E. détection dudit au moins un faisceau sensiblement monochromatique (4), à l'extrémité dudit chemin optique (33), à travers ladite au moins une ouverture de sortie (32) de ladite chambre de mesure (3); et
F. traitement dudit au moins un faisceau sensiblement monochromatique (4) ainsi détecté, pour déterminer la concentration de ladite substance à quantifier,
dans lequel
ledit au moins un faisceau sensiblement monochromatique (4) est généré au niveau de ladite au moins une ouverture d'entrée (31) de ladite chambre de mesure, et ledit au moins un faisceau sensiblement monochromatique (4) est détecté au niveau de ladite au moins une ouverture de sortie (32) de ladite chambre de mesure, de sorte que ledit chemin optique (33) présente une longueur correspondant sensiblement à la distance linéaire entre ladite au moins une ouverture d'entrée (31) et ladite au moins une ouverture de sortie (32) et
dans lequel ledit procédé est **caractérisé en ce qu'**il comprend également
une étape A2, préalable à ladite étape C, pour définir l'intensité lumineuse (Iᵢₙ) dudit faisceau sensiblement monochromatique (4), en fonction de l'état de propreté de ladite chambre de mesure (3) et/ou du vieillissement dudit au moins un dispositif émetteur (6) et/ou du vieillissement dudit au moins un dispositif détecteur (5), de sorte que plus l'état de propreté de ladite chambre de mesure (3) est mauvais et/ou plus l'état de vieillissement dudit au moins un dispositif émetteur (6) et/ou dudit au moins un dispositif détecteur (5) est élevé, plus l'intensité lumineuse (Iᵢₙ) définie dudit faisceau sensiblement monochromatique (4) est élevée, l'intensité lumineuse (Iᵢₙ) définie étant déterminée en réalisant une mesure « à vide » dans ladite chambre de mesure (3), dans lequel ladite mesure « à vide » comprend la mesure d'une intensité transmise dudit faisceau sensiblement monochromatique à travers ladite chambre de mesure (3) contenant ledit au moins un échantillon (2) de ladite solution liquide en l'absence de ladite substance réactive correspondante.

2. Procédé (1) selon la revendication 1, dans lequel ladite mesure « à vide » comprend:
A2.1 la génération dudit au moins un faisceau sensiblement monochromatique (4) ayant une intensité lumineuse initiale Iᵢₙ;
A2.2 l'éclairage dudit échantillon (2) de ladite solution liquide, avec ledit au moins un faisceau sensiblement monochromatique (4), le long dudit chemin optique (33);
A2.3 la détection dudit au moins un faisceau sensiblement monochromatique (4), à l'extrémité dudit chemin optique (33); et
A2.4 le traitement dudit au moins un faisceau sensiblement monochromatique (4) ainsi détecté, obtenant ainsi au moins un paramètre de référence (p₄), dans lequel ledit au moins un paramètre de référence (p₄) est une valeur de tension mesurée en sortie dudit au moins un dispositif détecteur (5), et
A2.5 la comparaison dudit au moins un paramètre de référence (p₄) avec au moins une première valeur seuil prédéterminée (S₀) de façon que si ledit au moins un paramètre de référence (p₄) est inférieur ou égal à ladite au moins une première valeur seuil prédéterminée (S₀), ledit procédé comprend
A2.6 l'émission d'au moins un signal d'erreur, pour indiquer un défaut qui empêche de terminer ladite au moins une mesure "à vide".

3. Procédé (1) selon la revendication 2, dans lequel:
A2.7 si ledit au moins un paramètre de référence (p₄) est supérieur à ladite au moins une première valeur seuil (S₀) et inférieure à au moins une deuxième valeur seuil (Sₘᵢₙ) avec S₀<Sₘᵢₙ, et
A2.8 si ladite au moins une tension d'excitation (Vᵢₙ) appliquée audit au moins un dispositif émetteur (6) est inférieure à une valeur maximale acceptable, optionnellement égale à approximativement 90% de V_{in_max},
ledit procédé comprend
A2.9 l'augmentation de la valeur de l'intensité lumineuse (Iᵢₙ) dudit au moins un faisceau sensiblement monochromatique (4), en augmentant ladite au moins une tension d'excitation (Vᵢₙ) appliquée audit au moins un dispositif émetteur (6), et répéter lesdites sous-étapes A2.1 à A2.5, dans lequel ledit au moins un faisceau monochromatique généré à ladite sous-étape A2.1 a une intensité lumineuse (Iᵢₙ) correspondant à celle déterminée à ladite sous-étape A2.9 qui vient d'être effectuée.

4. Procédé (1) selon la revendication 3, dans lequel ladite étape d'augmentation de la valeur de l'intensité lumineuse (Iᵢₙ) dudit au moins un faisceau sensiblement monochromatique (4), comprend l'augmentation de ladite au moins une tension d'excitation (Vᵢₙ) d'un certain pourcentage, optionnellement égal à 10%, optionnellement de manière constante ou à intervalles définis.

5. Procédé (1) selon la revendication 3 ou 4, dans lequel:
A2.7 si ledit au moins un paramètre de référence (p₄) est supérieur à ladite au moins une première valeur seuil (S₀) et inférieur à ladite au moins une deuxième valeur seuil (Sₘᵢₙ) avec S₀<Sₘᵢₙ, et
A2.8 si ladite au moins une tension d'excitation (Vᵢₙ) appliquée audit au moins un dispositif émetteur (6) est supérieure ou égale à une valeur maximale acceptable, optionnellement égale à approximativement 90% de V_{in_max}, ledit procédé comprend le passage à ladite étape C de génération dudit au moins un faisceau sensiblement monochromatique (4) avec l'intensité lumineuse Iᵢₙ correspondant à une valeur maximale acceptable, et l'émission (A2.10), d'un signal d'alerte précoce correspondant, pour informer que ladite au moins une chambre de mesure (3) commence à s'encrasser et les activités de maintenance correspondantes peuvent être programmées.

6. Procédé (1) selon l'une quelconque des revendications 2 à 5, dans lequel:
A2.11 si ledit au moins un paramètre de référence (p₄) est supérieur à ladite au moins une deuxième valeur seuil (Sₘᵢₙ) et inférieur ou égal à au moins une troisième valeur seuil (Sₘₐₓ) avec Sₘᵢₙ<Sₘₐₓ, ledit procédé comprend le passage à ladite étape C dans lequel la valeur de l'intensité lumineuse (Iᵢₙ) du faisceau sensiblement monochromatique (4) correspond à la valeur d'intensité lumineuse I_{IN} du faisceau sensiblement monochromatique à ladite sous-étape A2.1 qui vient d'être effectuée.

7. Procédé (1) selon l'une quelconque des revendications 2 à 6, dans lequel:
A2.11 si ledit au moins un paramètre de référence (P4) est supérieur à ladite au moins une troisième valeur seuil (Sₘₐₓ), ledit procédé comprend
A2.12 la réduction de la valeur de l'intensité lumineuse (Iᵢₙ) dudit au moins un faisceau sensiblement monochromatique (4), en réduisant ladite au moins une tension d'excitation (Vᵢₙ) appliquée audit au moins un dispositif émetteur (6), et la répétition desdites sous-étapes A2.1 à A2.5, dans lequel ledit au moins un faisceau monochromatique généré à ladite sous-étape A2.1 a une intensité lumineuse (Iᵢₙ) correspondant à celle déterminée à ladite sous-étape A2.12 qui vient d'être effectuée.

8. Procédé (1) selon la revendication 7, dans lequel ladite au moins une première valeur seuil prédéterminée (S₀) est une valeur de tension correspondant à une tension attendue au niveau dudit au moins un dispositif détecteur (5) lorsque ladite au moins une tension d'excitation (Vᵢₙ) appliquée audit au moins un dispositif émetteur (6) est approximativement égale à V_{in min}+(30 % (V_{in_max} - V_{in_min})) et est optionnellement comprise entre 550 et 750 mV, plus optionnellement comprise entre 600 et 700 mV, encore plus optionnellement approximativement 650 mV et/ou dans lequel ladite au moins une deuxième valeur seuil prédéterminée (Sₘᵢₙ) est une valeur de tension comprise entre 1 600 et 2 000 mV, plus optionnellement comprise entre 1 700 et 1 900 mV, encore plus optionnellement environ 1 800 mV et/ou dans lequel ladite au moins une troisième valeur seuil prédéterminée (Sₘₐₓ) est une valeur de tension comprise entre 2 000 et 2 080 mV, plus optionnellement comprise entre 2 020 et 2 060 mV, encore plus optionnellement égale à approximativement 2 040 mV.

9. Procédé (1) selon l'une quelconque des revendications 2 à 8, dans lequel ladite sous-étape A2.9 d'augmentation ou ladite sous-étape A2.12 de réduction de la valeur de l'intensité lumineuse (Iᵢₙ) dudit au moins un faisceau sensiblement monochromatique (4), comprend une étape d'ajustement d'une modulation PWM d'un signal de pilotage d'un dispositif émetteur (6), configurée pour la mise en oeuvre de ladite sous-étape A2.2 et de ladite étape D dudit procédé.

10. Procédé (1) selon l'une quelconque des revendications précédentes, comprenant une étape préliminaire A1 de sélection d'une longueur d'onde (λ₀), parmi une pluralité de longueurs d'onde, pour ledit au moins un faisceau sensiblement monochromatique (4) à générer à ladite étape C.

11. Procédé (1) selon la revendication 10, dans lequel ladite pluralité de longueurs d'onde comprend trois longueurs d'onde (λ₀ᵢ), avec i = 1, ..., 3, qui appartiennent au spectre de la lumière visible et/ou de l'ultraviolet.

12. Système (10) d'analyse spectrophotométrique d'un échantillon (2) d'une solution liquide, le système comprenant une chambre de mesure (3), dans lequel ladite chambre de mesure est configurée pour être reliée sélectivement en communication fluidique avec un conduit (81) d'un circuit hydraulique dans lequel circule ladite solution liquide, dans lequel la chambre de mesure (3) présente au moins une ouverture d'entrée (31) et au moins une ouverture de sortie (32), dans lequel l'au moins une ouverture d'entrée (31) est configurée pour qu'au moins un faisceau sensiblement monochromatique (4) pénètre dans la chambre de mesure (3) et soit transmis le long d'un chemin optique (33) de ladite chambre de mesure (3), et l'au moins une ouverture de sortie (32) est configurée pour garantir que ledit au moins un faisceau sensiblement monochromatique (4) sort de la chambre de mesure (3) à l'extrémité du chemin optique (33), le système comprenant:
- au moins un groupe de fourniture (8) dudit échantillon (2) de solution liquide, configuré pour fournir ledit échantillon (2) de ladite solution liquide au sein de ladite chambre de mesure (3), à partir dudit conduit (81) dudit circuit hydraulique,
- au moins un dispositif émetteur (6), configuré pour générer ledit faisceau sensiblement monochromatique (4) au niveau de ladite au moins une ouverture d'entrée (31) de ladite chambre de mesure (3) et émettre ledit faisceau sensiblement monochromatique (4) au niveau de ladite au moins une ouverture d'entrée (31) de ladite chambre de mesure (3), le long dudit chemin optique (33);
- au moins un groupe d'alimentation d'une substance réactive dans ladite au moins une chambre de mesure (3), configuré pour alimenter et mélanger ladite au moins une substance réactive dans ladite au moins une chambre de mesure (3);
- au moins un dispositif détecteur (5), configuré pour détecter ledit faisceau sensiblement monochromatique (4) au niveau de ladite au moins une ouverture de sortie (32) de ladite chambre de mesure (3), à l'extrémité dudit chemin optique (33);
- au moins une unité de commande et de traitement (7), fonctionnellement connectée audit au moins un dispositif émetteur (6) et audit au moins un dispositif détecteur (5) et audit au moins un groupe d'alimentation, et configurée avec ledit au moins un dispositif émetteur (6), ledit au moins un dispositif détecteur (5) et ledit au moins un groupe d'alimentation pour mettre en oeuvre le procédé selon l'une quelconque des revendications 1 à 11.

13. Système (10) selon la revendication 12, dans lequel ladite chambre de mesure est optionnellement fermée et dans lequel ledit au moins un dispositif émetteur (6) comprend au moins un élément de plaque (61) supportant une pluralité de dispositifs photoémetteurs (62, 63, 64) de type LED SMD, optionnellement trois, chacun configuré pour émettre une longueur d'onde différente λ₀ᵢ.

14. Système selon la revendication 13, dans lequel ledit élément de plaque (61) supporte ladite pluralité de dispositifs photoémetteurs (62, 63, 64) de telle sorte qu'ils font face à ladite au moins une ouverture d'entrée (31) de ladite chambre de mesure (3), sensiblement alignés avec ledit chemin optique (33) ou désalignés par rapport à celui-ci d'un angle n'excédant pas environ 20°, optionnellement n'excédant pas 10°.
